# EUROPÄISCHE PATENTSCHRIFT

(11) **EP 2 472 195 B1**
(45) Veröffentlichungstag und Bekanntmachung des Hinweises auf die Patenterteilung: **05.06.2013**
(21) Anmeldenummer: 10197158.8
(22) Anmeldetag: 28.12.2010
(51) Int. Cl.: F24J 2/54, F24J 2/14, H02P 25/20

(54) **Solarrinne**
Solar panel channel
Rainure solaire

(43) Veröffentlichungstag der Anmeldung: 04.07.2012
(73) Patentinhaber: HAWE Hydraulik SE, 81673 München (DE)
(72) Erfinder: Neumair, Georg, 85402, Thalhausen (DE); Hundschell, Hilarius, 84424 Isen (DE)
(74) Vertreter: Grünecker, Kinkeldey, Stockmair & Schwanhäusser

(56) Entgegenhaltungen:
- EP-A1- 2 226 592
- DE-B- 1 267 750
- DE-U1-202009 001 759
- FR-A1- 2 917 237
- US-A1- 2010 180 883

## Beschreibung

Die Erfindung betrifft eine Solarrinne der im Oberbegriff des Patentanspruchs 1 angegebenen Art.

Solche Solarrinnen, die beispielsweise bis zu 300 m lang sein können, werden in großer Anzahl in Solarkraftwerken, zur Zeit beispielsweise in Andalusien, und in Kürze auch in Nordamerika (Blythe-Projekt) verwendet, um ein Wärmeträgermedium zu erhitzen, mit dem elektrischer Strom erzeugt wird. Jede Solarrinne ist auf dem Boden an mehreren Pylonen angeordnet, von denen zumindest einer als Antriebspylon mit einer elektrohydraulischen Verstellvorrichtung ausgestattet ist, die die Solarrinne während eines Sonnentages gesteuert dem Sonnenstand nachführt, beispielsweise alle 15 bis 20 Sekunden. Die Solarrinne ist im Wesentlichen in einer Nord/Süd-Ausrichtung platziert und wird aus einer Morgenposition während des Sonnentages nach Westen verstellt. Bei Stromausfall oder Stromabschaltung kann das Wärmeträgermedium nicht mehr zirkuliert werden, so dass die Solarrinne dann über einen Notfallschritt beispielsweise mit 3° nach Osten aus der Sonne verdreht werden muss. Ferner wird beispielsweise während der Nacht die Solarrinne mittels der Verstellvorrichtung in die Morgenposition zurückgebracht. Weiterhin hat die Verstellvorrichtung auch die Aufgabe, im Falle von Sturm oder zu starkem Wind die Solarrinne in wenigstens eine Stauposition oder Wind-Schutzposition zu verstellen, wobei diese Verstellung innerhalb einer vorgeschriebenen Zeitspanne zu erfolgen hat, z.B. innerhalb von 10 Minuten, und zwar unabhängig davon, in welcher Drehposition sich die Solarrinne gerade befand. Die Solarrinne ist relativ gewichtsausgeglichen abgestützt, so dass die Sonnenstandsnachführung bei gutem Wetter mit relativ geringer hydraulischer Leistung möglich ist. Dennoch ist für den Fall hoher Windkräfte und damit starker Verstellkräfte für die Solarrinne ein Betriebsdruck von etwa 300 bar oder mehr üblich. Im Hinblick auf eine günstige Energiebilanz hat die Pumpenanordnung des Motorpumpenaggregats, von welchem die Verstellvorrichtung gespeist wird, eine relativ geringe Förderleistung, z.B. nur etwa 1 Liter/Minute. Es kann jeder Verstellschritt der Solarrinne durch Ein- und Ausschalten der Pumpenanordnung gesteuert werden, und/oder unter Nutzen eines Druckspeichers, der von der Pumpenanordnung aufgeladen wird. Über den überwiegenden Teil der Betriebsdauer der Solarrinne wird für Verstellschritte nur eine relativ geringe hydraulische Leistung benötigt. Bei starkem Wind und dann, wenn die Solarrinne in der vorgeschriebenen Zeitspanne in die Wind-Schutzposition gebracht werden muss, wird hohe hydraulische Leistung benötigt. Ein permanenter Betrieb der Verstellvorrichtung mit hoher, zumeist nicht abgenommener, hydraulischer Leistung resultiert in unnötiger Energievergeudung, und stellt für die Komponenten der Verstellvorrichtung wie auch das Hydrauliköl eine unzweckmäßig hohe Last dar, wird jedoch bisher aus Sicherheitsgründen in Kauf genommen.

Bei der aus EP 2 226 592 A bekannten Solarrinne weist das Motorpumpenaggregat der elektrohydraulischen Verstellvorrichtung einen Elektromotor und eine Einkreis- oder Zweikreis-Pumpenanordnung auf, die drehrichtungsumkehrbar ist, und in dem jeweiligen Kreis maximalen Systemdruck erzeugt, d.h., dass der Elektromotor stets mit hoher Leistung läuft.

Aus US 2010/0180883 A ist eine elektrohydraulische Verstellvorrichtung für eine Spiegelplattform oder plattformartige photovoltaische Zelle bekannt, bei der eine bedarfsabhängige, dynamische und stufenlos variierende Drehzahlsteuerung des Elektromotors der Pumpe in Pylonen der Plattform vorgenommen wird, z.B. mit pulsweiten Modulation oder über einen Treiber oder durch eine Ventiltaktung. Für die Verstellung der Plattform in eine Schutzposition wird ebenfalls die bedarfsabhängig erforderliche Mengenregelung des Hydraulikmediums durch Steuerung der Drehzahl des Elektromotors nach dem Kraftbedarf vorgenommen.

DE 20 2009 001 759 U betrifft elektromotorische Antriebe für eine Pumpe, auch zur Verstellung von Sonnensegeln, wobei mehrere Elektromotoren auf einer gemeinsamen Welle angeordnet und unter anderem aus Gründen der Ausfallsicherheit selektiv aktiviert und deaktiviert werden.

Aus FR 2 917 237 A ist ein an zwei beabstandeten Pylonen drehbar angeordnetes Solarpaneel bekannt, das um die Drehachse durch Motoren und Getriebe dem Sonnenstand nachgeführt wird. Um im Falle zu starken Windes eines Schutzposition einstellen zu können, werden die Pylonenoberteile mittels Hydraulikzylindern zum Boden gekippt, wobei diese Verstellung mit einer vorbestimmten Leistungsstufe des Antriebsmotors einer Pumpe ausgeführt wird.

Der Erfindung liegt die Aufgabe zugrunde, eine Solarrinne der eingangs genannten Art mit verbesserter Energiebilanz und günstigeren Belastungssituationen der Verstellvorrichtung zu schaffen.

Die gestellte Aufgabe wird mit den Merkmalen des Patentanspruchs 1 gelöst.

Von den unterschiedlichen, wahlweise nutzbaren Leistungsstufen wird eine höhere oder die höchste Leistungsstufe dann eingesetzt, wenn es die Belastungssituation an der Solarrinne erfordert, beispielsweise bei durch starken Wind an der Solarrinne hervorgerufenen Kräften zum Verstellen der Solarrinne in die Wind-Schutzposition innerhalb der vorbeschriebenen Zeitdauer. Hingegen wird während des größten Teils des Betriebs der Solarrinne eine niedrigere oder die niedrigste Leistungsstufe genutzt, die dann ohne Gefahr für die Betriebssicherheit ausreicht, z.B. um die Solarrinne dem Sonnenstand nachzuführen und/oder eine Notfallverstellung vorzunehmen. Selbst die Rückführung in die Morgenposition lässt sich mit einer niedrigeren oder der niedrigsten Leistungsstufe problemlos durchführen, da genügend Zeit zur Verfügung steht. Auf diese Weise wird insgesamt die Energiebilanz verbessert, und in der niedrigen Leistungsstufe ist die Last für die Komponenten der Verstellvorrichtung und das Hydrauliköl entsprechend geringer. Bei Verwendung eines Druckspeichers und Nutzen dessen Kapazität beispielsweise zur Sonnenstandsnachführung oder zumindest für einen Notfallschritt entstehen in der niedrigen Leistungsstufe für geringe Verstellkräfte nur geringe Drosselverluste. Dies gilt analog auch für einen Verstellbetrieb jeweils mit Ein- und Ausschalten der Pumpenanordnung, beispielsweise in Betriebsphasen, in denen einer der beiden die Verstellung vornehmenden Hydraulikzylinder, z.B. beim Durchfahren eines Totpunktbereiches, nur sehr geringe Hydraulikölmengen benötigt und ohnedies kaum Verstellkraft erzeugt.

Zweckmäßig ist jeder Elektromotor ein dreiphasiger Unterölmotor und mit der Pumpenanordnung in einem ein Ölreservoir bildenden Gehäuse des Motorpumpenaggregats im Hydrauliköl installiert. Dies trägt zur Kompaktheit der Verstellvorrichtung bei und verbessert die Effizienz der Wärmeabfuhr im Betrieb des Elektromotors. Dank der intensiven Kühlwirkung des Hydrauliköls am Unterölmotor ist es möglich, die Verstellvorrichtung mit reduzierter elektrischer Nennleistung für die niedrige Leistungsstufe zu betreiben, und die bei der höheren Leistungsstufe und beispielsweise nur der Verstellung in die Wind-Schutzposition über die vorbestimmte relative kurze Zeitdauer entstehende elektrische Überlastung zu tolerieren, weil sie unkritisch ist. Dadurch können kleiner dimensionierte Stromversorgungsleitungen benutzt werden, was sich bei einem Solarkraftwerk mit vielen hundert Kilometer langen Stromversorgungsleitungen in einer erheblichen Einsparung an Kupfer niederschlägt.

Bei einer zweckmäßigen Ausführungsform weist der polumschaltbare Elektromotor mindestens zwei verschiedenpolige, getrennt bestrombare Statorwicklungen auf. Vorzugsweise sind eine zweipolige und eine sechspolige Statorwicklung in ein- und demselben Elektromotor vorgesehen, die z. B. voneinander verschiedenen Drehzahlen des Elektromotors generieren lassen. Alternativ oder additiv kann der Elektromotor über einen entsprechend gesteuerten Frequenzumrichter mit unterschiedlichen Drehzahlen und/oder Drehmomenten betrieben werden. Gegebenenfalls wird ein Frequenzumrichter mit verschiedenpoligen Statorwicklungen kombiniert.

Bei einer anderen Ausführungsform mit zumindest zwei Elektromotoren zum Generieren unterschiedlicher Drehzahlen und/oder Drehmomente sind die Rotoren dieser Elektromotoren auf der gemeinsamen, mit der Pumpenanordnung gekoppelten Welle angeordnet, sind die Statoren der, vorzugsweise zwei, Elektromotoren fluchtend hintereinander im Gehäuse des Motorpumpenaggregats abgestützt, und wird die Welle im Gehäuse des Motorpumpenaggregats und in einem Lagerschild zumindest eines Elektromotors gelagert.

Bei dieser Ausführungsform kann es zweckmäßig sein, wenn jeweils zwei mit Abstand in Richtung der Achse der Welle benachbarte Statoren über einen Ringflansch miteinander verbunden sind. Dieser Ringflansch stellt die Fluchtung der beiden Elektromotoren sicher und kann, vorzugsweise, zusätzlich im Gehäuse des Motorpumpenaggregats abgestützt werden.

Zweckmäßig ist eine Ausführungsform, bei der der eine Elektromotor für die eine Leistungsstufe ein vierpoliger Elektromotor ist, während der andere für die andere Leistungsstufe ein zweipoliger Elektromotor ist.

Vorteilhaft ist außen am Gehäuse des Motorpumpenaggregats ein Klemmenkasten vorgesehen, der getrennte Motoranschlüsse für je eine Statorwicklung entweder des polumschaltbaren einzigen Elektromotors oder der mehreren Elektromotoren enthält.

Um die höhere Leistungsstufe nur dann einzusetzen, wenn dafür Notwendigkeit vorliegt, ist zweckmäßig für eine windabhängig zwischen den Leistungsstufen umschaltende Steuerung der Verstellvorrichtung wenigstens ein Windmesser vorgesehen. Es könnte zur Verstellung der Solarrinne in die Windschutzposition alternativ oder additiv eine programmierte Steuerungsroutine, z. B. unter Einsatz eines Zeitgliedes, eingesetzt werden.

Schließlich kann es zweckmäßig sein, wenn die Leistungsstufen in einem gegenseitigen Verhältnis von etwa 1 : 3 stehen, wobei die höhere oder höchste Leistungsstufe zweckmäßig zum Einstellen der Wind-Schutzposition und/oder über eine vorgeschriebene begrenzte Zeitdauer benutzt wird.

Ausführungsformen des Erfindungsgegenstandes werden anhand der Zeichnungen erläutert. Es zeigen:
- Fig. 1: eine schematische Seitenansicht einer Solarrinne,
- Fig. 2: ein Blockschaltbild einer elektrohydraulischen Verstellvorrichtung der Solarrinne,
- Fig. 3: einen Längsschnitt eines Motorpumpenaggregats mit einem polumschaltbaren Elektromotor,
- Fig. 4: einen Längsschnitt eines Motorpumpenaggregats mit zwei verschiedenpoligen Elektromotoren, und
- Fig. 5: einen Querschnitt des Motorpumpenaggregats der Fig. 3 und Fig. 4.

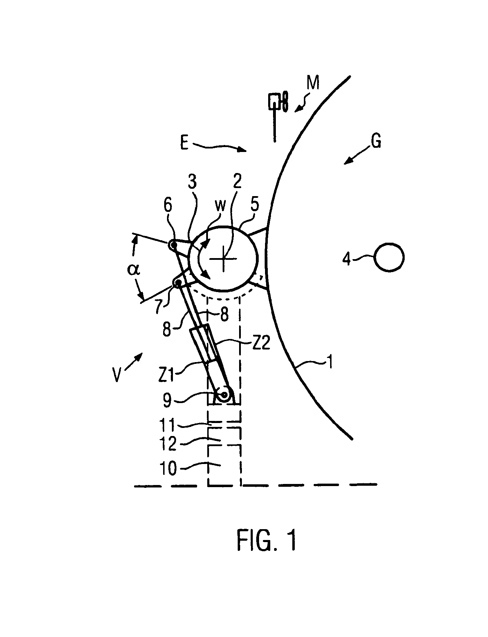

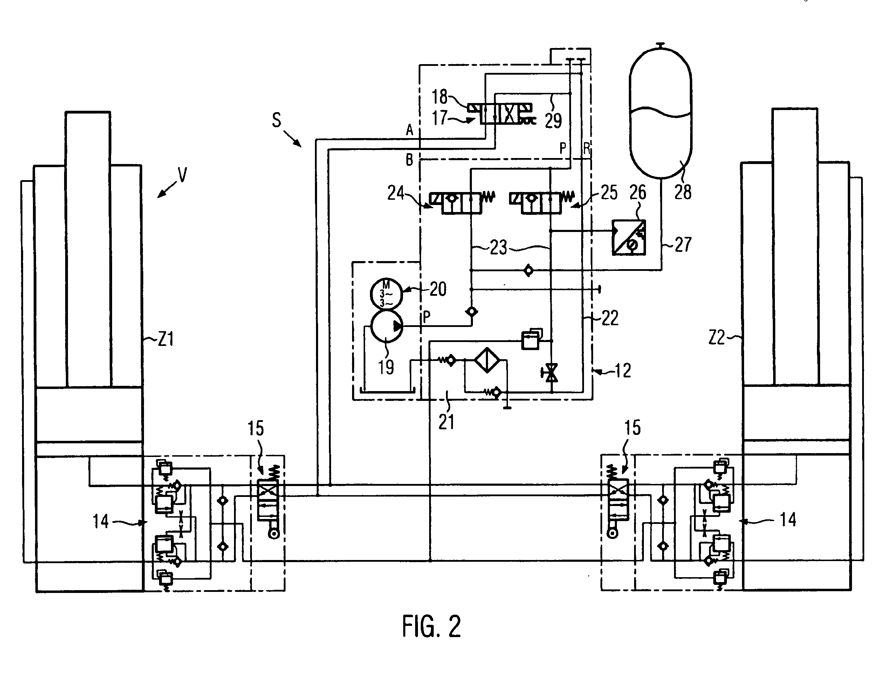

Eine Solarrinne G in Fig. 1 weist einen Parabolreflektor 1 auf, in dessen Brennpunktbereich ein Absorberrohr 4 positioniert ist, in welchem ein Wärmeträgermedium zirkuliert. Der Parabolreflektor 1 ist um eine Drehachse 2 verdrehbar, um zumindest dem Sonnenstand nachgeführt zu werden (Verstellrichtungspfeil 3, Osten/Westen). Um Nachführzyklen auszuführen, beispielsweise jeweils nach 15 bis 20 Sekunden über einige Sekunden, sind zwei doppelt wirkende Hydraulikzylinder Z1, Z2 an einer die Drehachse 2 definierenden Nabe 5 mit einer gegenseitigen Winkelversetzung α (z.B. etwa 30°) in Anlenkpunkten 6, 7 mit ihren Kolbenstangen 8 angelenkt. Die Hydraulikzylinder Z1, Z2 als Teil einer elektrohydraulischen Verstellvorrichtung V stützen sich beispielsweise an einem gemeinsamen Widerlager 9 eines Antriebspylonen 10 der Solarrinne G ab. Die elektrohydraulische Verstellvorrichtung V ist beispielsweise entsprechend Fig. 2 ausgebildet und mit einem Motorpumpenaggregat 12 und einer Steuerung 11 in den Antriebspylonen 10 eingegliedert und an eine elektrische Versorgungsleitung angeschlossen.

Die Hydraulikzylinder Z1, Z2 dienen ferner dazu, bei Stromausfall oder Stromabschaltung die Solarrinne G aus der jeweiligen Ausrichtung auf die Sonne, z.B. nach Osten, über ca. 3° in eine Notfallposition zu verdrehen, weil das Wärmeträgermedium nicht mehr in dem Absorberrohr 4 zirkulieren kann, oder beispielsweise während der Nacht die Solarrinne G wieder in die Morgenposition zurückzuführen, oder bei Unwetter oder starkem Wind, festgestellt z. B. durch einen Windmesser M, in wenigstens eine Wind-Schutzposition oder Stauposition zu verstellen, und zwar dann innerhalb eines vorgeschriebenen Zeitraumes von beispielsweise 10 Minuten.

Fig. 1 zeigt die Solarrinne G beispielsweise in einer Abendposition mit Ausrichtung nach Westen, wobei die Drehachse 2 im Wesentlichen eine Nord/Süd-Orientierung haben kann, und die Hydraulikzylinder Z1, Z2 in Nord/Süd-Richtung nebeneinander platziert sind.

Bei den Nachführzyklen ist aufgrund der guten Gewichtsausgeglichenheit der Solarrinne G relativ geringe hydraulische Leistung erforderlich, gegebenenfalls auch zur Verstellung über etwa 3° in die Notfallposition, wie auch zum langsamen Verstellen in die Morgenposition. Diese hydraulische Leistung könnte beispielsweise mit einer Stromleistung von etwa 0,5 bis 0,7 kW erbracht werden. Hingegen kann zum Verstellen der Solarrinne G bei Wind in die Wind-Schutzposition innerhalb der vorgeschriebenen Zeitspanne von etwa 10 Minuten höhere hydraulische Leistung benötigt werden, die mit einer Stromleistung von etwa 1,0 bis 1,5 kW erbracht werden könnte. Da der überwiegende Betrieb der Solarrinne G mit der geringeren Leistung durchführbar ist, und Betriebssituationen, die hohe Leistung erfordern, außerordentlich selten eintreten, bedeutet ein Betrieb aus Sicherheitsgründen permanent mit hoher Stromleistung bzw. hoher hydraulischer Leistung eine Energievergeudung und zusätzliche Belastungen. Im Hinblick darauf ist das Motorpumpenaggregat 12 der elektrohydraulischen Verstellvorrichtung V so konzipiert, dass bedarfsabhängig zwischen mindestens zwei verschiedenen Leistungsstufen umgeschaltet werden kann.

Die in Fig. 2 anhand eines Blockschaltbildes dargestellte Verstellvorrichtung V mit den beiden Hydraulikzylindern Z1, Z2 ist so ausgebildet, dass die beiden Hydraulikzylinder Z1, Z2 (vorzugsweise Differentialzylinder) an Arbeitsleitungen 12, 13 angeschlossen sind, jeweils abgesichert über eine Lasthalteventilanordnung 14. Wegeventile 15 und 16 in den Arbeitsleitungen 12, 13 steuern jeweils die Bewegungsrichtung jedes Hydraulikzylinders Z1, Z2. Innerhalb eines Gesamt-Schwenkbereiches der Solarrinne G über etwa 200° und mehr durchfahren die Hydraulikzylinder Z1, Z2 an der Nabe 5 zueinander versetzte Totpunktbereiche, und zwar in unterschiedlichen Drehstellungen der Solarrinne G. Für eine Verstellung der Solarrinne G beispielsweise zur Sonnenstands-Nachführung ausgehend von der Morgenposition fahren beide Kolbenstangen 8 zunächst ein, bis der erste Hydraulikzylinder seinen Totpunktbereich durchfährt, ab dem seine Kolbenstange ausgefahren wird, während der zweite Hydraulikzylinder seine Kolbenstange weiterhin einfährt. Später durchfährt auch der zweite Hydraulikzylinder seinen Totpunktbereich, ab dem auch seine Kolbenstange 8 ausgefahren wird. Bis zur Abendposition gemäß Fig. 1 fahren dann beide Kolbenstangen 8 aus.

In Fig. 2 sind die Wegeventile 15, 16 mechanisch gegen Federkraft betätigt, beispielsweise abhängig von den relativen Drehstellungen zwischen der Nabe 5 und dem Antriebspylonen 10, oder der Hydraulikzylinder Z1, Z2 im Anlenkpunkt 9, oder in den Anlenkpunkten 6, 7 der Kolbenstangen 8 an der Nabe 5.

Bei einer nicht gezeigten Alternative könnten die Wegeventile 15, 16 auch magnetbetätigt werden. Die Lasthalteventilanordnungen 14 und die Wegeventile 15, 16 sind beispielsweise direkt an den Hydraulikzylindern Z1, Z2 installiert.

Die Arbeitsleitungen 12, 13 sind gemeinsam an ein weiteres Wegeventil 17 angeschlossen, das durch einen Magneten 18 betätigbar ist (unbestromt Verstellrichtung Osten; bestromt Verstellrichtung Westen), und das an eine Druckleitung 29 und eine Tankleitung 22 zu einem Reservoir 21 angeschlossen ist. Auch von den Lasthalteventilanordnungen 14 kann eine Tankleitung 22 zum Reservoir 21 führen, aus welchem die Pumpenanordnung 19 ansaugt, um eine sich zu zwei Magnet-Schaltventilen 24 und 25 aufzweigende Druckleitung 23 zu speisen. Die Ausgänge dieser Schaltventile 24, 25 führen in eine Druckleitung 19 zum Wegeventil 17. An einen Ast der Druckleitung 23 ist über eine Leitung 27 ein Druckspeicher 28 angeschlossen, der beispielsweise unter Druck stehendes Gas wie Stickstoff enthält, das durch einen Kolben oder eine Membrane von einem Speichervolumen für Hydrauliköl getrennt ist. Ferner ist ein Drucksensor 26 als Teil einer Speicher-Ladeschaltung an den einen Ast der Druckleitung 23 angeschlossen.

Die Magnet-Schaltventile 24, 25 stehen stromlos auf Durchgang und sperren bestromt ab. Das Magnet-Schaltventil 25 hat in der Durchgangsstellung einen vorbestimmten Drosselwiderstand. Gegebenenfalls ist dahinter eine Blende oder ein Stromregler angeordnet. Die Speicher-Ladeschaltung dient dazu, im Speicherladebetrieb (Magnetschaltventil 25 bestromt) den Druckspeicher 28 auf Systemdruck aufzuladen, z.B. bis auf etwa 300 bar oder mehr. Das Magnet-Schaltventil 24 dient hingegen dazu, Nachführschritte nach Westen einzusteuern, wobei die Pumpenanordnung 19 bzw. ein elektromotorischer Antrieb 20 der Pumpenanordnung 19 eingeschaltet wird Bei bestromtem Magneten 18 wird die Zeitdauer des Nachführschrittes von der Einschalt-Zeitdauer des elektromotorischen Antriebs 20 und/oder der Stromlos-Zeitdauer des Magnetschaltventils 24 bestimmt.

Für einen Notfallschritt nach Osten wird bei stromlosen Schaltventilen 24 und 25 stromlosen des Magneten 18 eine Notfallverstellung Stromausfall oder Stromabschaltung Richtung Osten (z. B über 30) aus dem Druckspeicher 28 vorgenommen. Abhängig davon, in welche Richtung die Solarrinne G wieder in die Morgenposition oder eine Stauposition zu stellen ist, wird bei eingeschaltetem elektromotorischen Antrieb 20 und stromlosem Schaltventil 24 der Magnet 18 bestromt oder unbestromt belassen. Diese Verstellungen werden z. B. mit einer niedrigen Leistungsstufe gesteuert.

Um die Solarrinne G in die Wind-Schutzposition zu stellen, wird bei eingeschaltetem elektromotorischem Antrieb 20 und stromlosem Schaltventil 24 die jeweils günstige Stellrichtung am Schaltventil 17 durch den Schaltmagneten 18 (bestromt oder unbestromt) eingestellt, und wird der elektromotorische Antrieb 20 über ca. 10 Minuten eingeschaltet, bis die Schutzposition erreicht ist. Diese Verstellungen werden z. B. mit einer höheren Leistungsstufe gesteuert.

Das Motorpumpenaggregat 12 weist z. B. nicht nur die Pumpenanordnung 19 und den elektromotorischen Antrieb 20 (Unterölelektromotor) auf, sondern gemäß Fig. 2 auch die Magnet-Schaltventile 24 und 25 und das Wegeventil 17. Werden zumindest die Nachführschritte durch Ein- und Ausschalten des elektromotorischen Antriebs 20 gesteuert, dann muss ein vorgesehenes Motorrelais entsprechend häufig geschaltet werden. Alternativ wäre es möglich, zumindest die Nachführschritte, und zwar gegebenenfalls sogar eine Folge von Nachführschritten, nur aus dem Druckspeicher 28 zu steuern, wobei jedoch das Schaltventil 25 entsprechend häufig geschaltet werden muss, während das Motorrelais dann weitaus weniger Takte auszuführen hat.

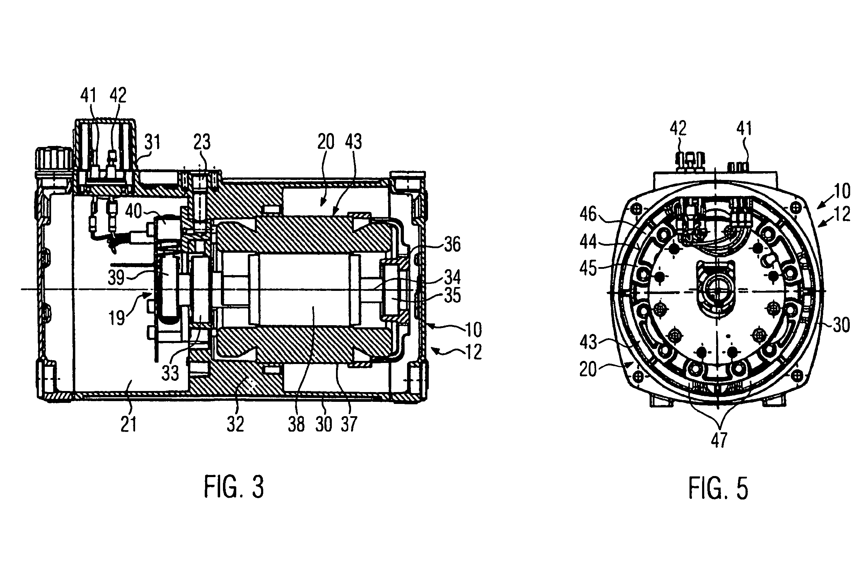

Die in den Fig. 3 und 5 gezeigte Ausführungsform des Motorpumpenaggregats 12 im Antriebspylonen 10 weist ein langgestrecktes Gehäuse 30 auf, auf dessen Oberseite ein Klemmenkasten 31 vorgesehen ist, und das das Reservoir 21 für Hydrauliköl definiert. Im Gehäuse 30 ist ein Ring 32 vorgesehen, in welchem beispielsweise die Druckleitung 23 von der Pumpenanordnung 19 beginnt, und in welchem der elektromotorische Antrieb 20 hier in Form eines polumschaltbaren Elektromotors 43 mit seinem Stator 37 festgelegt ist. Ferner ist in dem Ring 32 ein gehäusefestes Lager 33 für eine Welle 34 des Elektromotors 43 vorgesehen, auf der ein Rotor 38 angeordnet und die anderenends in einem Lagerschild 36 in einem Lager 35 gelagert ist. Der Stator 37 kann in den Ring 32 eingepresst, und gegebenenfalls zusätzlich, durch Schrauben festgelegt sein. Die Welle 34 ist hier über einen Exzenter 39 mit der Pumpenanordnung 19 gekoppelt, die beispielsweise ein oder mehrere sternförmig verteilte Radialkolbenpumpenelemente 40 umfasst. Im Klemmenkasten 31 sind getrennte Anschlüsse 41, 42 (jeweils drei Phasen) vorgesehen, an die (Fig. 5) eine hier sechspolige Statorwicklung 44 mit ihren Polen 45 sowie eine zweipolige Statorwicklung 46 mit ihren zwei Polen 47 des Elektromotors 43 getrennt angeschlossen sind. Die in Fig. 1 angedeutete Steuerung 11 schaltet beispielsweise windkraftabhängig (Windmesser M) zwischen unterschiedlichen Leistungsstufen der Pumpenanordnung 19 bzw. des Antriebs 20 um, d.h., zwischen den verschiedenpoligen Statorwicklungen 44, 46 des polumschaltbaren Elektromotors 43. Die Steuerung 11 kann hierfür alternativ oder additiv einen Servo-Frequenzumrichter (nicht gezeigt) für den Elektromotor 43 benutzen.

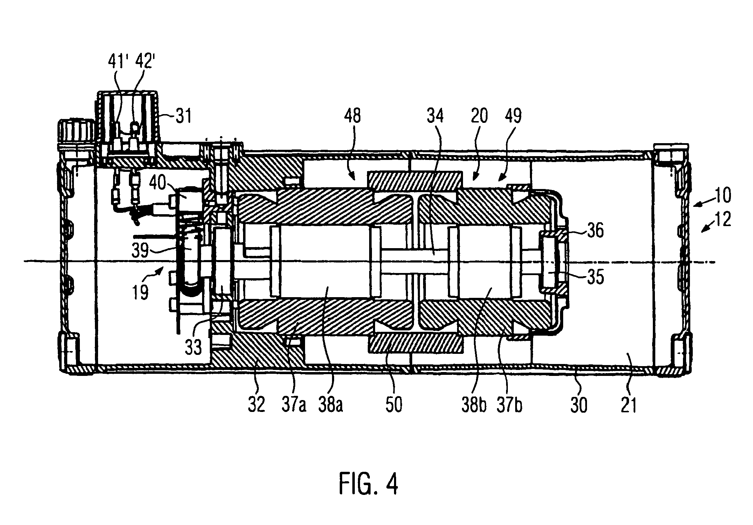

Die Ausführungsform des Motorpumpenaggregats 12 in Fig. 4 unterscheidet sich von der der Fig. 3 dadurch, dass für die beiden zwei unterschiedlichen Leistungsstufen der Pumpenanordnung 19 zwei verschiedenpolige Elektromotoren 48 und 49 den elektromotorischen Antrieb 20 bilden, die wahlweise einzeln und gegebenenfalls sogar gemeinsam einschaltbar sind. Der Elektromotor 48 ist beispielsweise ein vierpoliger Motor, dessen Statorwicklung im Stator 37a an die Anschlüsse 41' im Klemmenkasten 31 angeschlossen ist, während der andere Elektromotor 49 beispielsweise ein zweipoliger Elektromotor ist, dessen im Stator 37b enthaltende Statorwicklung an die Anschlüsse 42' angeschlossen ist. Die Rotoren 38a, 38b der beiden Elektromotoren 48, 49 sind auf der gemeinsamen Welle 34 angeordnet, die bei 33 und 35 gelagert ist. Der Stator 37a ist in dem Ring 32 des Gehäuses 30 fixiert, während der Stator 37b über einen äußeren Ringflansch 50 mit dem Stator 37a verbunden ist. Alternativ oder additiv zum außen vorgesehenen Ringflansch 50 könnte ein innerer Ringflansch in beide Statoren 37a, 37b eingepresst sein.

Die in Fig. 1 gezeigte Steuerung schaltet beispielsweise windkraft- oder windstärkenabhängig (Windmesser M) entweder den Elektromotor 48 oder den Elektromotor 49 ein, oder, gegebenenfalls sogar beide, um bedarfsabhängig die unterschiedlichen Leistungsstufen der Pumpenanordnung 19 zu wählen.

In beiden Ausführungsformen wird die höhere Leistungsstufe beispielsweise nur für eine Notfallsituation bzw. zum Verstellen der Solarrinne G in die Wind-Schutzposition z. B. innerhalb der programmierten oder durch ein Zeitglied vorbestimmten Zeitdauer von etwa 10 Minuten genutzt, während für die anderen Verstellvorgänge der Solarrinne G eine niedrigere oder die niedrigste Leistungsstufe genutzt wird.

## Patentansprüche

1. Solarrinne (G), die mittels einer ein Motorpumpenaggregat (12) aufweisenden, elektrohydraulischen Verstellvorrichtung (V) um eine Drehachse (2) zumindest dem Sonnenstand nachführbar und bei Wind in wenigstens eine Schutzposition einstellbar ist, wobei in dem Motorpumpenaggregat (12) eine Pumpenanordnung (19) mit einem elektromotorischen Antrieb (20) vorgesehen ist, **dadurch gekennzeichnet, dass** die Pumpenanordnung (19) entsprechend dem Leistungsbedarf zur Solarrinnen-Verstellung zwischen mindestens zwei Leistungsstufen umstellbar ist und entweder durch einen Elektromotor (43) mit Polumschaltung und/oder Frequenzumricht-Umschaltung oder durch mehrere wahlweise einzeln oder zusammen einschaltbare, eine gemeinsame Welle (34) aufweisende Elektromotoren (48, 49) antreibbar ist, wobei die höhere oder höchste Leistungsstufe zum Einstellen der Wind-Schutzposition der Solarrinne (G) über eine vorbestimmte, begrenzte Zeitdauer einschaltbar ist.

2. Solarrinne nach Anspruch 1, **dadurch gekennzeichnet, dass** jeder Elektromotor (48, 49, 43) als dreiphasiger Unterölmotor ausgebildet und mit der Pumpenanordnung (19) in einem ein Ölreservoir (21) bildenden Gehäuse (30) des Motorpumpenaggregats (12) im Hydrauliköl installiert ist.

3. Solarrinne nach Anspruch 1, **dadurch gekennzeichnet, dass** der polumschaltbare Elektromotor (43) mindestens zwei verschiedenpolige, getrennt bestrombare Statorwicklungen (44, 46) aufweist, vorzugsweise eine zweipolige und eine sechspolige Statorwicklung (44, 46).

4. Solarrinne nach Anspruch 1, **dadurch gekennzeichnet, dass** Rotoren (38a, 38b) der mehreren Elektromotoren (48, 49) auf der gemeinsamen, mit der Pumpenanordnung (19) gekoppelten Welle (34) angeordnet sind, dass die Statoren (37a, 37b) der, vorzugsweise zwei, Elektromotoren (48, 49) fluchtend hintereinander im Gehäuse (30) des Motorpumpenaggregats (12) abgestützt sind, und dass die Welle (34) im Gehäuse (30) des Motorpumpenaggregats (12) und in einem Lagerschild (36) zumindest eines Elektromotors (49) gelagert ist.

5. Solarrinne nach Anspruch 4, **dadurch gekennzeichnet, dass** jeweils zwei mit Abstand in Richtung der Achse der Welle (34) benachbarte Statoren (37a, 37b) über einen Ringflansch (50) miteinander verbunden sind, und dass, vorzugsweise, der Ringflansch (50) im Gehäuse (30) des Motorpumpenaggregats (12) abgestützt ist.

6. Solarrinne nach Anspruch 1, **dadurch gekennzeichnet, dass** ein Elektromotor (48) ein vierpoliger Elektromotor und der andere Elektromotor (49) ein zweipoliger Elektromotor ist.

7. Solarrinne nach wenigstens einem der vorhergehenden Ansprüche, **dadurch gekennzeichnet, dass** außen am Gehäuse (30) des Motorpumpenaggregats (12) ein Klemmenkasten (31) vorgesehen ist, der getrennte Motoranschlüsse (41, 42) für je eine Statorwicklung enthält.

8. Solarrinne nach wenigstens einem der vorhergehenden Ansprüche, **dadurch gekennzeichnet, dass** für eine windabhängig zwischen den Leistungsstufen umschaltenden Steuerung (11) der Verstellvorrichtung (V) wenigstens ein Windmesser (M) vorgesehen ist.

9. Solarrinne nach wenigstens einem der vorhergehenden Ansprüche, **dadurch gekennzeichnet, dass** die Leistungsstufen in einem Verhältnis von etwa 1 : 3 stehen.

## Claims

1. Solar trough collector (G) which can be adjusted about a rotational axis (2) by means of an electro-hydraulic adjustment device (V) comprising a motor pump aggregate (12) either at least for tracking the position of the sun or in case of wind into at least one wind-protected position, wherein a pump assembly (19) having an electromotoric drive (20) is provided in the motor pump aggregate (12) **characterised in that** the pump assembly (19) can be switched according to the power requirement for adjusting the solar trough collector (G) between at least two power stages and is drivable either by an electric motor (43) having a pole-changing control and/or frequency converting changing control or by several electric motors (48, 49) having a common shaft (34), which several electric motors (48, 49) can be switched on selectively alone or commonly, wherein the higher or the highest power stage can be switched in for a predetermined limited time duration for adjusting the solar trough collector (G) into the wind-protected position.

2. Solar trough collector according to claim 1, **characterised in that** each electric motor (43, 48, 49) is constructed as a three-polar motor for application immersed in oil and is installed together with the pump assembly (19) in a housing (30) of the motor pump aggregate (12) within hydraulic oil, the housing (30) forming an oil reservoir (21).

3. Solar trough collector according to claim 1, **characterised in that** the electric motor (43) having the pole-changing control comprises at least two different pole stator windings (43, 46) which can be supplied with current separately, preferably a two-pole and a six-pole stator winding (44, 46).

4. Solar trough collector according to claim 1, **characterised in that** rotors (38a, 38b) of the several electric motors (48, 49) are arranged on the common shaft (34) which is connected with the pump assembly (19), that the stators (37a, 37b) of the, preferably, two, electric motors (48, 49) are supported in line one behind the other in the housing (30) of the motor pump aggregate (12), and that the shaft (34) is rotatably supported in the housing of the motor pump aggregate (12) and in a bearing shield (36) belonging to at least one electric motor (49).

5. Solar trough collector according to claim 4, **characterised in that** respective two stators (37a, 37b) which are positioned adjacently with a distance in the direction of the axis of the shaft (34) are connected to each other by a ring flange (50) and that, preferably, the ring flange (50) is supported in the housing (30) of the motor pump aggregate (12).

6. Solar trough collector according to claim 1, **characterised in that** one electric motor (48) is a four-pole electric motor and the other electric motor (49) is a two-pole electric motor.

7. Solar trough collector according to at least one of the preceding claims, **characterised in that** a motor connection box (31) is provided outside at the housing (30) of the motor pump aggregate (12) and contains separated motor terminals (41, 42) each one for a respective stator winding.

8. Solar trough collector according to at least one of the preceding claims, **characterised in that** at least one wind velocity indicator (M) is provided for a control device (11) of the adjustment device (V), which control device is apt to switch between the power stages depending on the wind velocity.

9. Solar trough collector according to at least one of the preceding claims, **characterised in that** the power stages have a ratio of about 1:3.

## Revendications

1. Collecteur solaire cylindro-parabolique (G) qui peut au moins tourner autour d'un axe de rotation (2) pour suivre la course du soleil à l'aide d'un dispositif de réglage électro-hydraulique (V) comportant un groupe motopompe (12) et qui peut être positionné dans au moins une position de protection en cas de vent, dans lequel un agencement de pompe (19) avec un entraînement à moteur électrique (20) est pourvu dans le groupe motopompe (12), **caractérisé en ce que** l'agencement de pompe (19) peut être configuré pour déplacer le collecteur entre au moins deux niveaux de puissance en fonction de la demande de puissance, et peut être entraîné soit par un moteur électrique (43) à commutation de pôles et/ou à commutation par variateur de fréquence, soit par une pluralité de moteurs électriques (48, 49) commutables au choix de façon individuelle ou collective et comportant un arbre commun (34), dans lequel le niveau de puissance plus élevé ou le plus élevé peut être activé pour commander la position de protection contre le vent du collecteur (G) sur une durée prédéterminée et limitée.

2. Collecteur solaire cylindro-parabolique selon la revendication 1, **caractérisé en ce que** chaque moteur électrique (48, 49, 43) est un moteur triphasé immergé à bain d'huile installé dans de l'huile hydraulique avec l'agencement de pompe (19) dans un carter (30) du groupe motopompe (12) constituant un réservoir d'huile (21).

3. Collecteur solaire cylindro-parabolique selon la revendication 1, **caractérisé en ce que** le moteur électrique à commutation de pôles (43) comporte au moins deux enroulements de stator multipolaires (44, 46) à alimentations séparées, préférablement un enroulement de stator bipolaire et un entraînement de stator hexapolaire (44, 46).

4. Collecteur solaire cylindro-parabolique selon la revendication 1, **caractérisé en ce que** des rotors (38a, 38b) des multiples moteurs électriques (48, 49) sont agencés sur l'arbre commun (34) accouplé à l'agencement de pompe (19), **en ce que** les stators (37a, 37b) des moteurs électriques (48, 49), préférablement deux, sont supportés de façon contiguë l'un derrière l'autre dans le carter (30) du groupe motopompe (12), et **en ce que** l'arbre (34) est supporté dans le carter (30) du groupe motopompe (12) et dans un flasque de palier (36) d'au moins un moteur électrique (49).

5. Collecteur solaire cylindro-parabolique selon la revendication 4, **caractérisé en ce que** deux stators (37a, 37b) adjacents espacés en direction de l'axe de l'arbre (34) sont connectés entre eux par une bride annulaire (50), et **en ce que** la bride annulaire (50) est préférablement supportée dans le carter (30) du groupe motopompe (12).

6. Collecteur solaire cylindro-parabolique selon la revendication 1, **caractérisé en ce qu'**un moteur électrique (48) est un moteur électrique quadripolaire et l'autre moteur électrique (49) est un moteur électrique bipolaire.

7. Collecteur solaire cylindro-parabolique selon au moins l'une des revendications précédentes, **caractérisé en ce qu'**une boîte à bornes (31) comportant les connexions de moteur séparées (41, 42) pour chaque enroulement de stator est pourvue à l'extérieur du carter (30) du groupe motopompe (12).

8. Collecteur solaire cylindro-parabolique selon au moins l'une des revendications précédentes, **caractérisé en ce qu'**une commande (11) du dispositif de réglage (V) qui commute entre les niveaux de puissance indépendamment du vent est pourvue d'au moins un anémomètre (M).

9. Collecteur solaire cylindro-parabolique selon au moins l'une des revendications précédentes, **caractérisé en ce que** les niveaux de puissance présentent un ratio d'environ 1:3.
